# EUROPEAN PATENT APPLICATION

(11) **EP 4 451 027 A1**
(43) Date of publication of application: **23.10.2024**
(21) Application number: 24170450.1
(22) Date of filing: 16.04.2024
(51) Int. Cl.: G02B 6/38

(54) **COMBINABLE OPTICAL-FIBER ADAPTER ASSEMBLY**

(30) Priority: 19.04.2023 CN 202310423049
(71) Applicant: Acon Optics Communications Inc., New Taipai City 231 (TW)
(72) Inventor: CUI, Yang-Yang, 231 New Taipei City (TW); CHANG, Yan-Mei, 231 New Taipei City (TW)
(74) Representative: Viering, Jentschura & Partner mbB Patent- und Rechtsanwälte

(57) **Abstract**

A combinable optical-fiber adapter assembly includes combinable optical-fiber adapters. A first optical-fiber adapter (1) includes a first adapter body (11), and a first side wall (11a) of the first adapter body (11) has first connection units (15). A second optical-fiber adapter (2) includes a second adapter body (21), and a first side wall (21a) of the second adapter body (21) has second connection units (25). The first connection units (15) are assembled with the second connection units (25). In a one-to-one manner, each of the first connection units (15) is docked with a corresponding one of the second connection units (25), so that two adjacent optical-fiber adapters can be assembled side-by-side. Optical-fiber cables (8) are inserted into the optical-fiber adapter from one side of the optical-fiber adapter. The optical-fiber adapter has a reduced length.

## Description

### FIELD OF THE INVENTION

The instant disclosure relates to an adapter, and more particular to a combinable optical-fiber adapter assembly.

### BACKGROUND

The optical-fiber cable serves as an tool for optical transmission. An optical-fiber connector assembly includes an adapter and a male optical-fiber connector. The adapter is installed on the electronic device. Therefore, when the male optical-fiber connector is inserted into the adapter, the male optical-fiber is fixed with the adapter, enabling signals transmission to the electronic device through the optical-fiber connector assembly. However, the length of the adapter is longer. A lucent connector (LC) type optical-fiber adapter is utilized as an optical transmission connector for LC-type optical-fiber cables to transmit optical signals. However, in an LC-type adapter known to the inventor, the number of the holes of the LC-type adapter for the insertion of connectors is fixed (which may be one, two, four, or the like). Consequently, the adapter fails to provide flexible layout configurations for the optical-fiber cables, leading to wasted layout space.

### SUMMARY OF THE INVENTION

Regarding the small form-factor pluggable (SFP) modules or quad small form-factor pluggable modules (QSFP) known to the inventor, the number of the optical-fiber cables arranged in the module is usually two or four. The size of the module is larger which occupies a larger space, thus failing to provide a compact layout configuration for 5G applications.

In view of these, one or some embodiments of the instant disclosure provide a combinable optical-fiber adapter assembly so that the compact layout configurations of optical-fiber cables within a small space for 5G applications can be satisfied. Moreover, according to one or some embodiments, the connector and the adapter of the adapter assembly can satisfy the requirements for small space utilization, the adapters can be combined with each other, the elastic arms of the adapters can be engaged with the connector, and the adapter can be disengaged from the connector through a fixture.

According to some embodiments, a combinable optical-fiber adapter assembly is provided. The combinable optical-fiber adapter assembly is adapted to be installed on an adapter cassette and connected to an optical-fiber cable and a terminal device. The combinable optical-fiber adapter assembly comprises a first optical-fiber adapter and a second optical-fiber adapter. The first optical-fiber adapter comprises a first adapter body. Two ends of the first adapter body have a first connecting end and a first inserting end. The first connecting end is inside the adapter cassette and extends toward the terminal device, and the first inserting end is outside the adapter cassette and adapted to be inserted by the optical-fiber cable. Four side walls of the first adapter body define a first receiving cavity, and the first inserting end of the first adapter body has a first insertion opening in communication with the first receiving cavity. The four side walls of the first adapter body are a first side wall, a second side wall, a first blocking wall, and a first combining base wall, respectively. The first side wall and the second side wall of the first adapter body respectively extend from two sides of the first combining base wall toward a same direction away from the first combining base wall. The first blocking wall is connected to the first side wall and the second side wall of the first adapter body, the first blocking wall is spaced apart from the first combining base wall, and the first side wall of the first adapter body has a first connection unit. The second optical-fiber adapter comprises a second adapter body. Two ends of the second adapter body have a second connecting end and a second inserting end. The second connecting end is inside the adapter cassette and extends toward the terminal device, and the second inserting end is outside the adapter cassette and adapted to be inserted by the optical-fiber cable. Four side walls of the second adapter body define a second receiving cavity, and the second inserting end of the second adapter body has a second insertion opening in communication with the second receiving cavity. The four side walls of the second adapter body are a first side wall, a second side wall, a second blocking wall, and a second combining base wall, respectively. The first side wall and the second side wall of the second adapter body receptively extend from two sides of the second combining base wall toward a same direction away from the second combining base wall. The second blocking wall is connected to the first side wall and the second side wall of the second adapter body, the second blocking wall is spaced apart from the second combining base wall, and the first side wall of the second adapter body has a second connection unit. The second connection unit is docked with the first connection unit, so that the first adapter body and the second adapter body adjacent to the first adapter body are assembled with each other side-by-side.

In some embodiments, the first connection unit has a first recess and a first protrusion, the first recess is at a front portion of the first side wall of the first adapter body, and the first protrusion is at a rear portion of the first side wall of the first adapter body. Alternatively, in some other embodiments, the first connection unit has a second protrusion and a second recess, the second protrusion is at the front portion of the first side wall of the first adapter body, and the second recess is at the rear portion of the first side wall of the first adapter body.

In some embodiments, the second connection unit has a third protrusion and a third recess, the third protrusion is at a front portion of the second side wall of the second adapter body, and the third recess is at a rear portion of the second side wall of the second adapter body. Alternatively, in other some embodiments, the second connection unit has a fourth recess and a fourth protrusion, the fourth recess is at the front portion of the second side wall of the second adapter body, and the fourth protrusion is at the rear portion of the second side wall of the second adapter body.

In some embodiments, a width of the first recess is greater than or equal to a width of the third protrusion, and a width of the first protrusion is less than or equal to a width of the third recess.

In some embodiments, a width of the second protrusion is less than or equal to a width of the fourth recess, and a width of the second recess is greater than or equal to a width of the fourth protrusion.

In some embodiments, the first adapter body has a plurality of first elastic arms at the first connecting end, and a first connector is adapted to be engaged between each two adjacent first elastic arms among the first elastic arms; the second adapter body has a plurality of second elastic arms at the second connecting end, and a second connector is adapted to be engaged between each two adjacent second elastic arms among the second elastic arms; the first connector and the second connector are respectively connected to a transmission cable inside the adapter cassette.

In some embodiments, the first connector comprises a housing, an insertion pin, and a spring, the housing is fitted over the insertion pin and the spring, and two ends of the spring abut against an inner side of the housing and the insertion pin, respectively.

In some embodiments, the first connection unit is on the first side wall of the first adapter body along an axial direction, the axial direction is perpendicular to an insertion direction of the first receiving cavity, the second connection unit is on the first side wall of the second adapter body along the axial direction, and the axial direction is perpendicular to an insertion direction of the second receiving cavity.

In some embodiments, the first connection unit extends from a side portion of the first blocking wall of the first adapter body to a side portion of the first combining base wall of the first adapter body, and the second connection unit extends from a side portion of the second blocking wall of the second adapter body to a side portion of the second combining base wall of the second adapter body.

In some embodiments, the first side wall of the first adapter body has a first engaging portion, the first side wall of the second adapter body has a second engaging portion, and the first engaging portion is assembled with the second engaging portion.

In some embodiments, the first side wall of the first adapter body has a plurality of the first connection units, the first connection units are on two side portions of the first side wall of the first adapter body, and the first engaging portion is between the first connection units; the first side wall of the second adapter body has a plurality of the second connection units, the second connection units are on two side portions of the first side wall of the second adapter body, and the second engaging portion is between the second connection units.

In some embodiments, the first engaging portion is adjacent to one of the first connection units, and the second engaging portion is adjacent to one of the second connection units.

In some embodiments, the first engaging portion has a groove and an insertion hole, each of two sides of the insertion hole has a buckling portion, the second engaging portion has a protruding block, the protruding block is engaged with the groove through the insertion hole, and each of the buckling portions contacts the protruding block and is limited by the protruding block.

In some embodiments, the first engaging portion is between the first side wall of the first adapter body and the first blocking wall of the first adapter body, and the second engaging portion is between the first side wall of the second adapter body and the second blocking wall of the second adapter body.

In some embodiments, the first blocking wall of the first adapter body is flush with the second blocking wall of the second adapter body, and the first combining base wall of the first adapter body is flush with the second combining base wall of the second adapter body.

In some embodiments, the first engaging portion is between the first side wall of the first adapter body and the first combining base wall of the first adapter body, and the second engaging portion is between the first side wall of the second adapter body and the second combining base wall of the second adapter body.

In some embodiments, the second side wall of the second adapter body and the first side wall of the second adapter body are symmetrically arranged at two sides of the second adapter body, the second side wall of the second adapter body has a plurality of third connection units and a third engaging portion; the combinable optical-fiber adapter assembly further comprises a third optical-fiber adapter, the third optical-fiber adapter comprises a third adapter body, four side walls of the third adapter body define a third receiving cavity, two ends of the third adapter body have third insertion openings in communication with the third receiving cavity, and a first side wall of the third adapter body has a plurality of fourth connection units and a fourth engaging portion; each of the third connection units is assembled with a corresponding one of the fourth connection units, and the third engaging portion is assembled with the fourth engaging portion.

In some embodiments, the first side wall of the second adapter body has a plurality of the second connection units, the second connection units at a front portion and a rear portion of the first side wall of the second adapter body respectively correspond to the third connection units at a front portion and a rear portion of the second side wall of the second adapter body.

In some embodiments, a first length of the first blocking wall is less than a first length of the first combining base wall, and a second length of the second blocking wall is less than a second length of the second combining base wall.

In some embodiments, the first adapter body has a stopping portion adj acent to the first connecting end, the second side wall of the first adapter body has an engaging structure, the engaging structure is engaged with one of two surfaces of the adapter cassette, and the stopping portion is engaged with the other surface of the adapter cassette.

According to some embodiments of the instant disclosure, the first connection unit of the first adapter body is correspondingly docked with the second connection unit of the second adapter body, so that two adjacent optical-fiber adapters can be assembled with each other side-by-side. According to some embodiments, the optical-fiber cables are inserted into the optical-fiber adapter from one side of the optical-fiber adapter. As compared with the optical-fiber adapter known to the inventor, the entire length of the optical-fiber adapter is reduced, and thus the requirements for 5G optical-fiber modules can be satisfied. By arranging several optical-fiber adapters side by side and interconnecting the optical-fiber adapters with each other, the optical-fiber adapters allow the insertion of several optical-fiber connectors, so that the adapters can provide flexible layout configurations for the optical-fiber cables. According to some embodiments, through the fixation between the first connection units and the second connection units and the fixation between the first engaging portion and the second engaging portion, the connecting side walls of the optical-fiber adapters do not detach from each other by the downward pulling force of the optical-fiber cables.

### BRIEF DESCRIPTION OF THE DRAWINGS

The instant disclosure will become more fully understood from the detailed description given herein below for illustration only, and thus not limitative of the instant disclosure, wherein:
Fig. 1 illustrates a perspective view of an optical-fiber adapter assembly according to some embodiments of the instant disclosure;
Fig. 2 illustrates an exploded view of the optical-fiber adapter assembly according to some embodiments of the instant disclosure, where the exploded view of the base assembly is illustrated;
Fig. 3 illustrates a front exploded view of the optical-fiber adapter assembly according to some embodiments of the instant disclosure;
Fig. 4 illustrates a rear exploded view of the optical-fiber adapter assembly according to some embodiments of the instant disclosure;
Fig. 5 illustrates an exploded view of the first connector according to some embodiments of the instant disclosure;
Fig. 6A illustrates an assembled side view of the optical-fiber adapter assembly according to some embodiments of the instant disclosure, where the first engaging portion is above the first side wall of the first adapter body, and the second engaging portion is above the first side wall of the second adapter body;
Fig. 6B illustrates an assembled side view of the optical-fiber adapter assembly according to some embodiments of the instant disclosure, where one first connection unit is engaged with one second connection unit;
Fig. 7 illustrates an enlarged assembled view of the first engaging portion and the second engaging portion according to some embodiments of the instant disclosure;
Fig. 8 illustrates an enlarged assembled view of the first engaging portion and the second engaging portion according to some embodiments of the instant disclosure;
Fig. 9 illustrates a top view of the optical-fiber adapter assembly according to some embodiments of the instant disclosure, where the first recess is mated with the third protrusion, and the first protrusion is mated with the third recess;
Fig. 10 illustrates an assembled side view of the optical-fiber adapter assembly according to some embodiments of the instant disclosure, where the first engaging portion is below the first side wall of the first adapter body, and the second engaging portion is below the first side wall of the second adapter body;
Fig. 11 illustrates a top view of the optical-fiber adapter assembly according to some embodiments of the instant disclosure, where the second protrusion is mated with the fourth protrusion, and the first protrusion is mated with the third recess; and
Fig. 12 illustrates a top view of an adapter cassette according to some embodiments of the instant disclosure, where a plurality of optical-fiber adapter assemblies is assembled in the adapter cassette and adapted to be connected to optical-fiber cables.

### DETAILED DESCRIPTION

Detailed description of the characteristics and the advantages of the instant disclosure are shown in the following embodiments. The technical content and the implementation of the instant disclosure should be readily apparent to any person skilled in the art from the detailed description, and the purposes and the advantages of the instant disclosure should be readily understood by any person skilled in the art with reference to content, claims, and drawings in the instant disclosure.

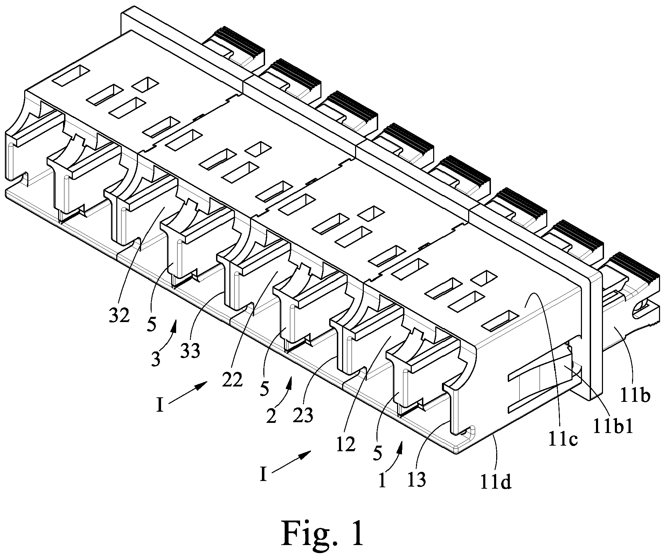

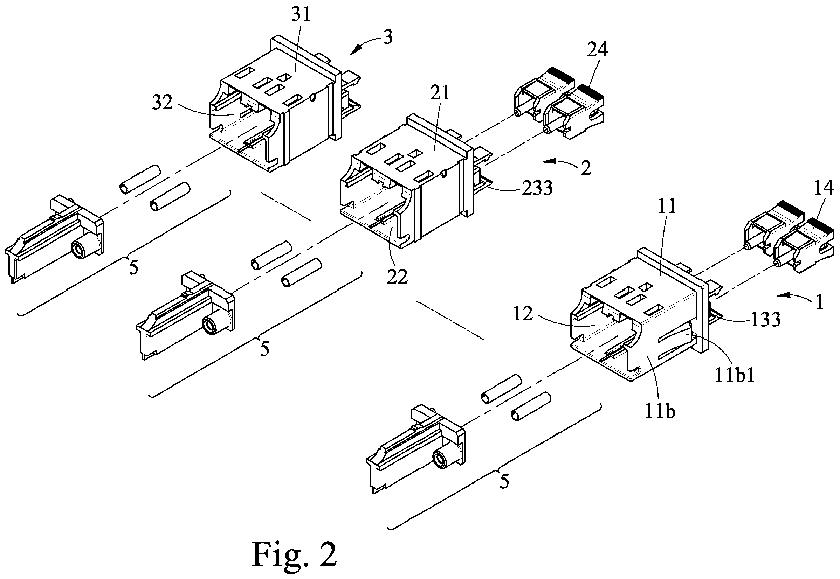

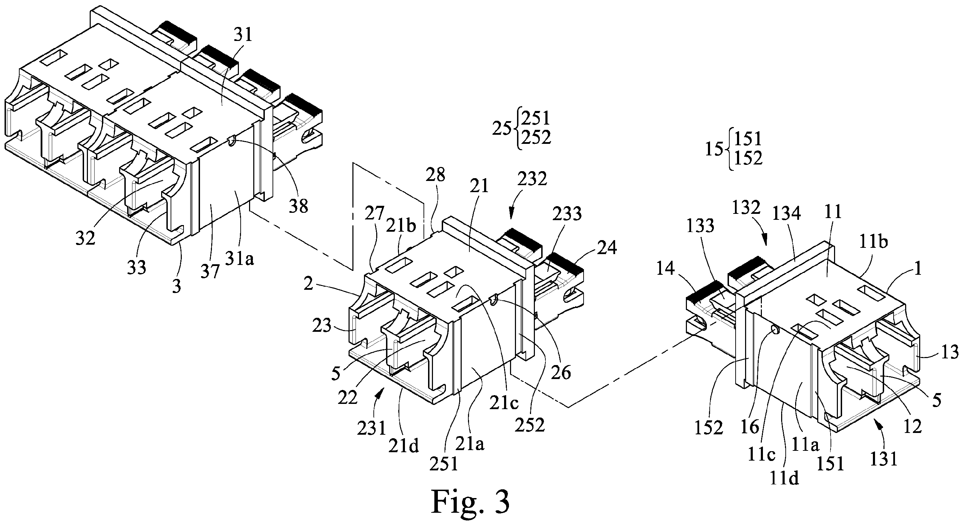

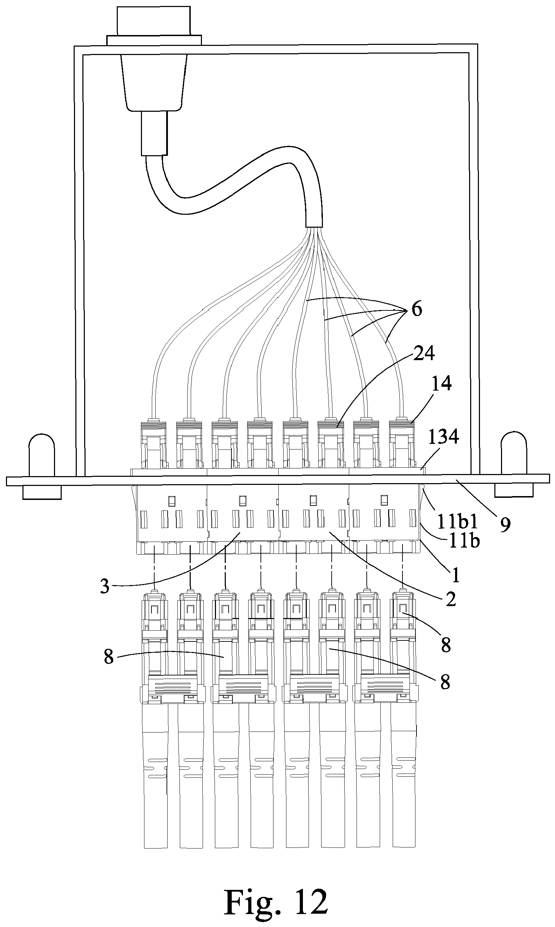

Please refer to Fig. 1 to Fig. 3. Fig. 1 illustrates a perspective view of an optical-fiber adapter assembly. Fig. 2 illustrates an exploded view of the optical-fiber adapter assembly, where the exploded view of the base assembly 5 is illustrated. Fig. 3 illustrates a front exploded view of the optical-fiber adapter assembly. In some embodiments, the optical-fiber adapter assembly is adapted to be installed on an adapter cassette 9 (as shown in Fig. 12), the optical-fiber adapter assembly is connected to an optical-fiber cable 8 and a terminal device (such as a cabinet), and the optical-fiber adapter assembly is adapted to be connected to lucent connectors (LC connectors) in communication cabinets for signal transmission. Moreover, the optical-fiber adapter assembly can be provided for small space, high density applications in small form-factor pluggable (SFP) modules or quad small form-factor pluggable modules (QSFP). The optical-fiber adapter assembly is provided for the insertion of a plurality of optical-fiber cables 8, and the optical-fiber cable 8 has an optical-fiber connector provided for applications in cabinets in which the connectors are compactly arranged. The optical-fiber adapter assembly comprises a plurality of optical-fiber adapters arranged side by side and interconnected with each other. In the following descriptions, as an illustrative example, the optical-fiber adapter assembly comprises a first optical-fiber adapter 1 and a second optical-fiber adapter 2. Each of the first optical-fiber adapter 1 and the second optical-fiber adapter 2 has a base assembly 5 therein.

The first optical-fiber adapter 1 comprises a first adapter body 11, and two ends of the first adapter body 11 have a first inserting end 131 and a first connecting end 132. The first inserting end 131 is outside the adapter cassette 9 and is adapted to be inserted by the optical-fiber cable 8, and the first connecting end 132 is inside the adapter cassette 9 and extends toward the terminal device. The optical-fiber cables 8 are inserted into the first optical-fiber adapter 1 from one side of the first optical-fiber adapter 1 (as shown in Fig. 12). Therefore, as compared with an optical-fiber adapter known to the inventor, the entire length of the first optical-fiber adapter 1 is reduced, and thus the requirements for 5G optical-fiber modules can be satisfied. Four side walls of the first adapter body 11 define a first receiving cavity 12. The lengths of the four side walls of the first adapter body 11 are shorter to just cover the front end of the optical-fiber cables 8 (as shown in Fig. 12).

The first inserting end 131 of the first adapter body 11 has a first insertion opening 13 in communication with the first receiving cavity 12. The four side walls of the first adapter body 11 are a first side wall 11a, a second side wall 11b, a first blocking wall 11c, and a first combining base wall 11d, respectively. The first side wall 11a and the second side wall 11b of the first adapter body 11 respectively extend from two sides of the first combining base wall 11d toward a same direction away from the first combining base wall 11d, the first blocking wall 11c is connected to the first side wall 11a and the second side wall 11b, and the first blocking wall 11c is spaced apart from the first combining base wall 11d. The first side wall 11a of the first adapter body 11 has a first connection unit 15.

The second optical-fiber adapter 2 comprises a second adapter body 21, and two ends of the second adapter body 21 have a second inserting end 231 and a second connecting end 232. The second inserting end 231 is outside the adapter cassette 9 and is adapted to be inserted by the optical-fiber cable 8, and the second connecting end 232 is inside the adapter cassette 9 and extends toward the terminal device. The optical-fiber cables 8 are inserted into the second optical-fiber adapter 2 from one side of the second optical-fiber adapter 2 (as shown in Fig. 12). Therefore, as compared with an optical-fiber adapter known to the inventor, the entire length of the second optical-fiber adapter 2 is reduced, and thus the requirements for 5G optical-fiber modules can be satisfied. Four side walls of the second adapter body 21 define a second receiving cavity 22. The lengths of the four side walls of the second adapter body 21 are shorter to just cover the front end of the optical-fiber cables 8 (as shown in Fig. 12).

The second inserting end 231 of the second adapter body 21 has a second insertion opening 23 in communication with the second receiving cavity 22. The four side walls of the second adapter body 21 are a first side wall 21a, a second side wall 21b, a second blocking wall 21c, and a second combining base wall 21d, respectively. The first side wall 21a and the second side wall 21b of the second adapter body 21 respectively extend from two sides of the second combining base wall 21d toward a same direction away from the second combining base wall 21d, the second blocking wall 21c is connected to the first side wall 21a and the second side wall 21b, and the second blocking wall 21c is spaced apart from the second combining base wall 21d. The first side wall 21a of the second adapter body 21 has a second connection unit 25. The second connection unit 25 is docked with the first connection unit 15, so that the first adapter body 11 and the second adapter body 21 adjacent to the first adapter body 11 are assembled with each other side-by-side.

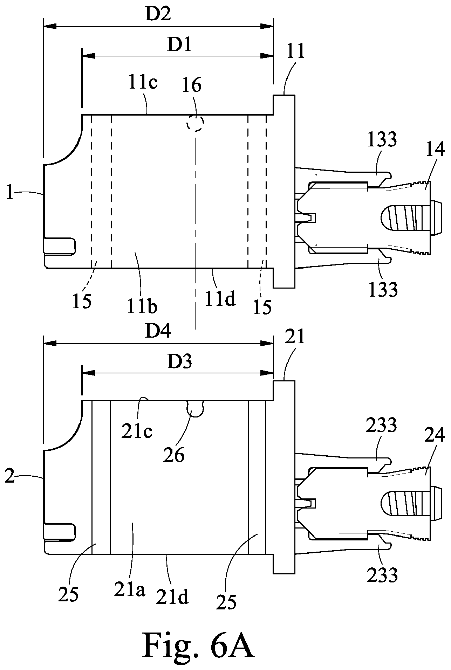

Please refer to Fig. 1 to Fig. 3. In some embodiments, a first length D1 of the first blocking wall 11c is less than a first length D2 of the first combining base wall 11d (as shown in Fig. 6A), and a second length D3 of the second blocking wall 21c is less than a second length D4 of the second combining base wall 21d.

Please refer to Fig. 1 to Fig. 3. In some embodiments, the first adapter body 11 has a stopping portion 134 adjacent to the first connecting end 132, the second side wall 11b of the first adapter body 11 has an engaging structure 11b1, the engaging structure 11b1 is engaged with one of two surfaces of the casing of the adapter cassette 9, and the stopping portion 134 is engaged with the other surface of the casing of the adapter cassette 9 (as shown in Fig. 12).

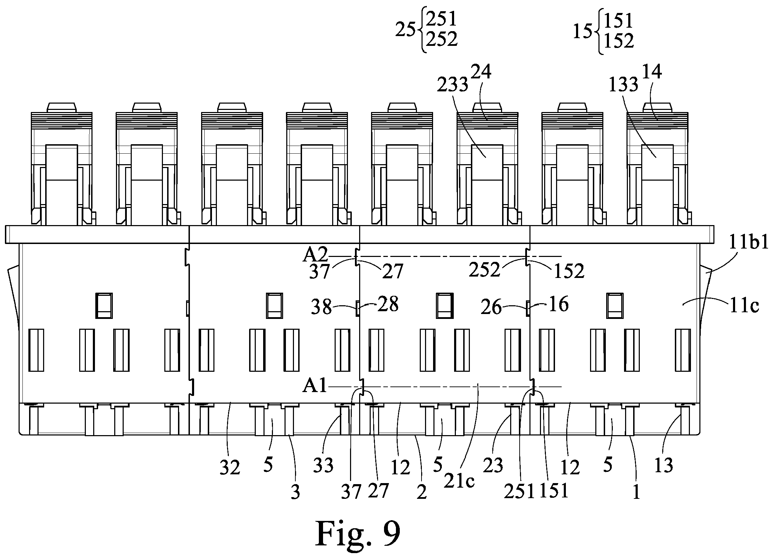

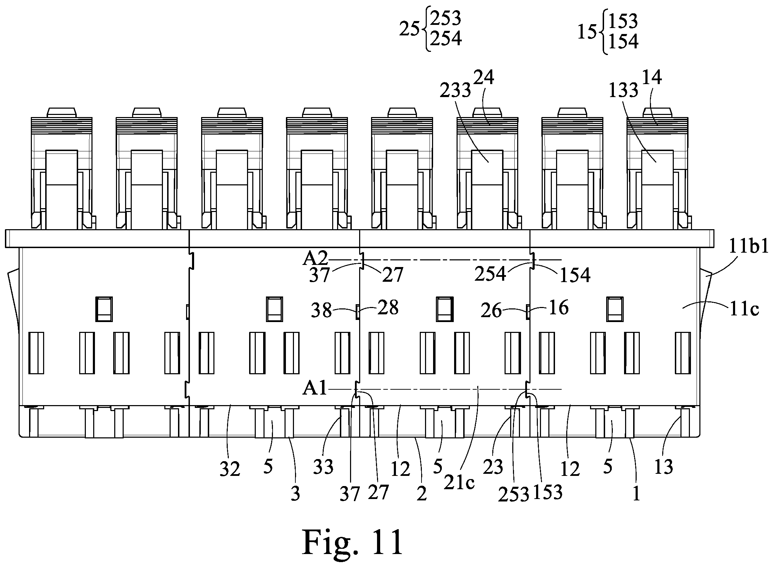

Please refer to Fig. 1 to Fig. 3. In some embodiments, the first connection unit 15 has a first recess 151 and a first protrusion 152, wherein the first recess 151 is at a front portion of the first side wall 11a of the first adapter body 11, and the first protrusion 152 is at a rear portion of the first side wall 11a of the first adapter body 11 (as shown in Fig. 9). Alternatively, in other some embodiments, the first connection unit 15 has a second protrusion 153 and a second recess 154, wherein the second protrusion 153 is at the front portion of the first side wall 11a of the first adapter body 11, and the second recess 154 is at the rear portion of the first side wall 11a of the first adapter body 11 (as shown in Fig. 11).

Please refer to Fig. 1 to Fig. 3. In some embodiments, the second connection unit 25 has a third protrusion 251 and a third recess 252, wherein the third protrusion 251 is at a front portion of the second side wall 21b of the second adapter body 21, and the third recess 252 is at a rear portion of the second side wall 21b of the second adapter body 21. Alternatively, in other some embodiments, the second connection unit 25 has a fourth recess 253 and a fourth protrusion 254, wherein the fourth recess 253 is at the front portion of the second side wall 21b of the second adapter body 21, and the fourth protrusion 254 is at the rear portion of the second side wall 21b of the second adapter body 21.

In some embodiments, the first recess 151 and the third protrusion 251 are docked with each other in a one-to-one manner, and the first protrusion 152 and the third recess 252 are docked with each other in a one-to-one manner, so that the first adapter body 11 and the second adapter body 21 adjacent to the first adapter body 11 are assembled with each other side-by-side (as shown in Fig. 9). Alternatively, in some embodiments, the second protrusion 153 and the fourth recess 253 are docked with each other in a one-to-one manner, and the second recess 154 and the fourth protrusion 254 are docked with each other in a one-to-one manner, so that the first adapter body 11 and the second adapter body 21 adjacent to the first adapter body 11 are assembled with each other side-by-side (as shown in Fig. 11).

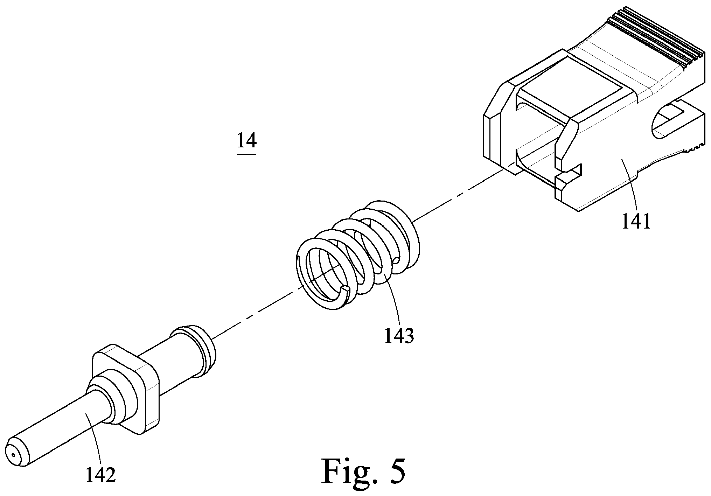

Please refer to Fig. 3 and Fig. 5. In some embodiments, the first adapter body 11 has a plurality of first elastic arms 133 at the first connecting end 132, and a first connector 14 is adapted to be engaged between each two adjacent first elastic arms 133 among the first elastic arms 133. Moreover, for each two adjacent first elastic arms 133, the two first elastic arms 133 extend obliquely and gradually come closer to each other, and an inner side of each of the first elastic arms 133 has a protruding block. In some embodiments, the second adapter body 21 has a plurality of second elastic arms 233 at the second connecting end 232, and a second connector 24 is adapted to be engaged between each two adjacent second elastic arms 233 among the second elastic arms 233. Moreover, for each two adjacent second elastic arms 233, the two second elastic arms 233 extend obliquely and gradually come closer to each other, and an inner side of each of the second elastic arms 233 has a protruding block. The first connector 14 and the second connector 24 are respectively connected to a transmission cable 6 inside the adapter cassette 9 (as shown in Fig. 12). The first elastic arms 133 can be disengaged from the first connector 14 and the second elastic arms 233 can be disengaged from the second connector 24 through a fixture.

The entire length of the first connector 14 and the first optical-fiber adapter 1 is shorter, and thus the requirements for 5G optical-fiber modules can be satisfied. Likewise, the entire length of the second connector 24 and the second optical-fiber adapter 2 is shorter, and thus the requirements for 5G optical-fiber modules can be satisfied.

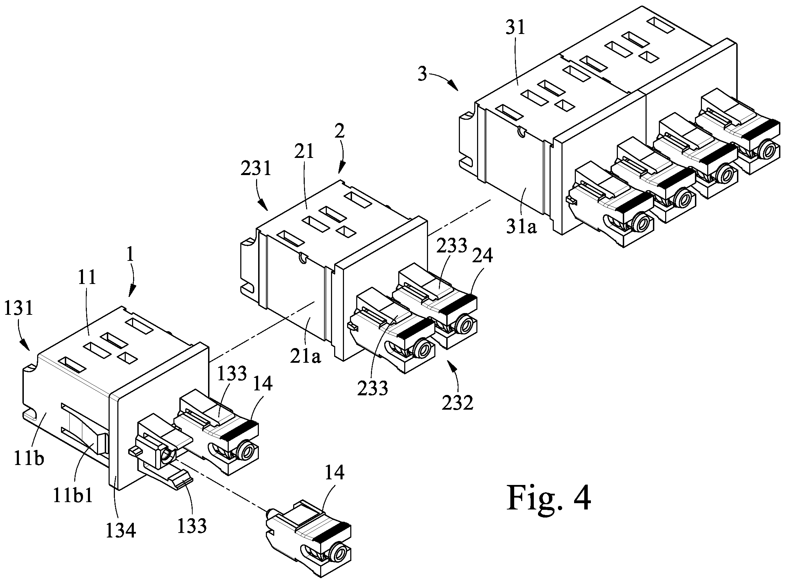

Please refer to Fig. 4 and Fig. 5. Fig. 4 illustrates a rear exploded view of the optical-fiber adapter assembly. Fig. 5 illustrates an exploded view of the first connector 14. In some embodiments, the structure of the first connector 14 is identical to the structure of the second connector 24. Take the first connector 14 as an example, the first connector 14 comprises a housing 141, an insertion pin 142, and a spring 143. The housing 141 is fitted over the insertion pin 142 and the spring 143, and two ends of the spring 143 abut against an inner side of the housing 141 and the insertion pin 142, respectively.

Please refer to Fig. 1 to Fig. 3. In some embodiments, a width of the first recess 151 is greater than or substantially equal to a width of the third protrusion 251, and a width of the first protrusion 152 is less than or substantially equal to a width of the third recess 252 (as shown in Fig. 9). Alternatively, in other some embodiments, a width of the second protrusion 153 is less than or substantially equal to a width of the fourth recess 253, and a width of the second recess 154 is greater than or substantially equal to a width of the fourth protrusion 254 (as shown in Fig. 11).

Please refer to Fig. 1 to Fig. 3. In some embodiments, the first side wall 11a of the first adapter body 11 has a plurality of first connection units 15, and the first side wall 21a of the second adapter body 21 has a plurality of second connection units 25. Take the combination of two first connection units 15 and two second connection units 25, when the first optical-fiber adapter 1 is assembled with the second optical-fiber adapter 2, through docking the two first connection units 15 at the front portion and the rear portion of the first adapter body 11 with the two second connection units 25 at the front portion and the rear portion of the second adapter body 21, respectively, unsuitable mating between the two adapter bodies can be prevented, so that the first connection unit 15 (such as the first recess 151) at the front portion of the first adapter body 11 cannot be docked with the second connection unit 25 (such as the third recess 252) at the rear portion of the second adapter body 21, and the first connection unit 15 (such as the first protrusion 152) at the rear portion of the first adapter body 11 cannot be docked with the second connection unit 25 (such as the third protrusion 251) at the front portion of the second adapter body 21.

Please refer to Fig. 3 and Fig. 6A. Fig. 3 illustrates an exploded view of the optical-fiber adapter assembly. Fig. 6A illustrates an assembled side view of the optical-fiber adapter assembly. In some embodiments, the first side wall 11a of the first adapter body 11 has a first engaging portion 16, and the first side wall 21a of the second adapter body 21 has a second engaging portion 26. The first engaging portion 16 is above the first side wall 1 1a of the first adapter body 11, and the second engaging portion 26 is above the first side wall 21a of the second adapter body 21.

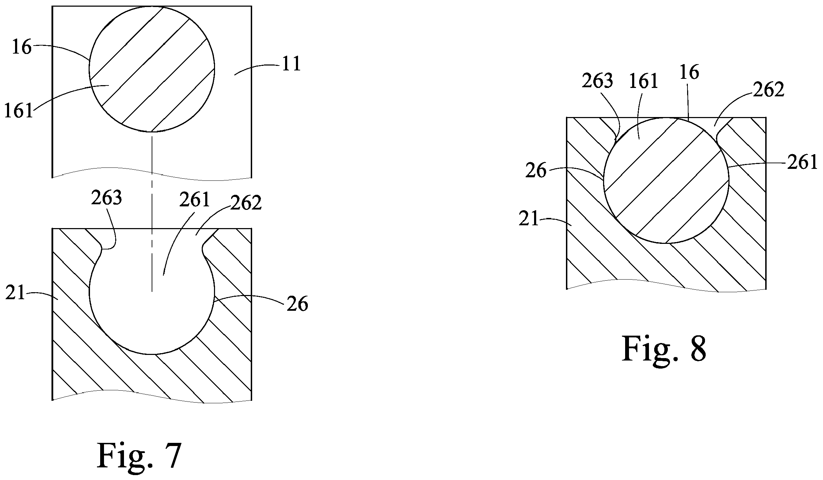

When the first optical-fiber adapter 1 is assembled with the second optical-fiber adapter 2, the first side wall 11a of the first optical-fiber adapter 1 is docked with the first side wall 21a of the second optical-fiber adapter 2, so that the first connection units 15 of the first adapter body 11 are respectively assembled with the second connection units 25 of the second adapter body 21 in a direction from bottom to top (as shown in Fig. 6A). Therefore, the first engaging portion 16 is assembled and positioned with the second engaging portion 26 in the direction from bottom to top (as shown in Fig. 7 and Fig. 8), and thus the first optical-fiber adapter 1 and the second optical-fiber adapter 2 are assembled with each other to form a combinable optical-fiber adapter assembly (as shown in Fig. 9). Accordingly, several optical-fiber adapters can be interconnected with each other, thereby the number of the insertion holes for the connectors can increased, thereby increasing the applicability of the optical-fiber adapter assembly.

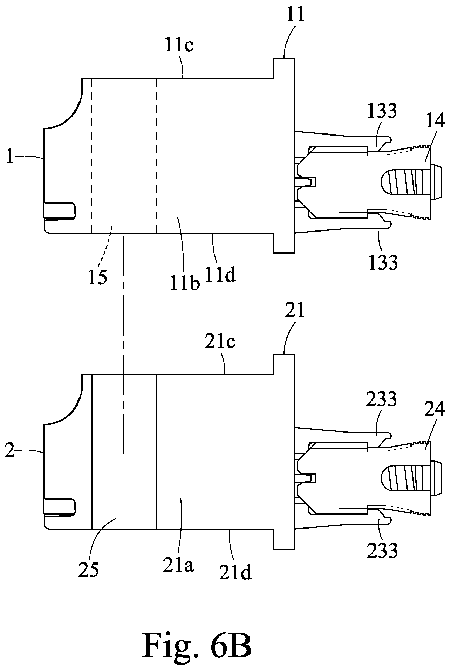

Please refer to Fig. 6B. Fig. 6B illustrates an assembled side view of the optical-fiber adapter assembly, where one first connection unit 15 is engaged with one second connection unit 25. In some embodiments, the first adapter body 11 has only one first connection unit 15, and the second adapter body 21 has only one second connection unit 25. The widths of the first connection unit 15 and the second connection unit 25 shown in Fig. 6B are greater than the widths of the first connection unit 15 and the second connection unit 25 shown in Fig. 6A. The width of the first connection unit 15 is substantially one third of the side portion of the first adapter body 11, and the width of the second connection unit 25 is substantially one third of the side portion of the second adapter body 21. Therefore, in some embodiments, after the first connection unit 15 and the second connection unit 25 are assembled with each other in the direction from bottom to top, the first optical-fiber adapter 1 and the second optical-fiber adapter 2 can be assembled with each other properly.

Please refer to Fig. 1 to Fig. 3. In some embodiments, the first connection unit 15 on the front portion of the first adapter body 11 is docked with the second connection unit 25 on the front portion of the second adapter body 21 which is adjacent to the first adapter body 11 in a one-to-one manner, and the first connection unit 15 on the rear portion of the first adapter body 11 is docked with the second connection unit 25 on the rear portion of the second adapter body 21 which is adjacent to the first adapter body 11 in a one-to-one manner, so that two adjacent optical-fiber adapters can be assembled with each other side-by-side, and the two first connection units are respectively docked with the two second connection units. Therefore, the optical-fiber adapters can be aligned with each other to provide a uniform appearance.

Please refer to Fig. 3. In some embodiments, the first adapter body 11 and the second adapter body 21 are hollowed rectangular bodies. The first adapter body 11 and the second adapter body 21 are manufactured by injection molding techniques and are respectively formed as a one-piece member. The first adapter body 11 and the second adapter body 21 have rigid structures and improved structural strengths.

Please refer to Fig. 2 and Fig. 3. In some embodiments, base assemblies 5 are disposed in the first receiving cavity 12 and the second receiving cavity 22. Therefore, the first receiving cavity 12 is divided into two cavities (in some embodiments, the base assembly 5 is absent and the first receiving cavity 12 is still a single cavity). Likewise, the second receiving cavity 22 is divided into two cavities (in some embodiments, the base assembly 5 is absent and the second receiving cavity is still a single cavity). The first adapter body 11 may further comprise a plurality of first insertion openings 13, and the second adapter body may further comprise a plurality of second insertion openings 23. The number of the first insertion openings 13 and the second insertion openings 23 may be four, eight, sixteen, thirty-two, or the like. Therefore, several optical-fiber connectors can be respectively inserted into the first insertion openings 13 and the second insertion openings 23.

Please refer to Fig. 3 and Fig. 6A. In some embodiments, the first connection unit 15 and the second connection unit 25 are concave and convex structures mated with each other; the first connection unit 15 is a ducktail groove, and the second connection unit 25 is a ducktail protrusion, but the instant disclosure is not limited thereto. In some embodiments, the first connection unit 15 is a ducktail protrusion, and the second connection unit 25 is a ducktail groove. In some embodiments, the first connection unit 15 and the second connection unit 25 are T-shaped or gourd-shaped concave and convex structures mated with each other. After each of the first connection units 15 is assembled with a corresponding one of the second connection units 25, the optical-fiber adapters can be prevented from being detached from each other easily when the side portion of the optical-fiber adapters are subjected to a force.

Please refer to Fig. 3 and Fig. 6A. In some embodiments, the first connection unit 15 and the second connection unit 25 are structures with rails, so that the first connection unit 15 and the second connection unit 25 are slidably assembled and engaged with each other, but the instant disclosure is not limited thereto. In some embodiments, the first connection unit 15 and the second connection unit 25 are engaged with each other in an interference fit manner.

Please refer to Fig. 7 and Fig. 8. In some embodiments, the first engaging portion 16 and the second engaging portion 26 are concave and convex structures mated with each other. In some embodiments, the first engaging portion 16 is a protruding block 161, and the second engaging portion 26 is a groove 261. In some embodiments, the second engaging portion 26 has a groove 261 and an insertion hole 262, each of two sides of the insertion opening 262 has a buckling portion 263, the protruding block 161 is engaged with the groove 261 through the insertion hole 262, and each of the buckling portions 263 contacts the protruding block 161 and is limited by the protruding block 161. Therefore, the first engaging portion 16 is engaged with the second engaging portion 26, and the first adapter body 11 can be positioned with the second adapter body 21. When the first engaging portion 16 is to be detached from the second engaging portion 26, the user can apply a force to detach the first adapter body 11 from the second adapter body 21, so that the first engaging portion 16 can be detached from the second engaging portion 26. In some embodiments, the first engaging portion 16 may be a groove (which may be round, square, or of other geometrical shapes), and the second engaging portion 26 may be a protruding block (which may be round, square, or of other geometrical shapes).

Please refer to Fig. 1 and Fig. 3. In some embodiments, the insertion direction I of the first receiving cavity 12 for the insertion of the optical-fiber connector(s) is the same as the insertion direction I of the second receiving cavity 22 for the insertion of the optical-fiber connector(s). Each of the first connection units 15 is on the first side wall 11a of the first adapter body 11 along an axial direction, and the axial direction is perpendicular to the insertion direction I of the first receiving cavity 12. Each of the second connection units 25 is on the first side wall 21a of the second adapter body 21, and the axial direction is perpendicular to the insertion direction I of the second receiving cavity 22.

Please refer to Fig. 3 and Fig. 6A. In some embodiments, each of the first connection units 15 is an elongated slide groove, each of the first connection units 15 extends from a side portion of the first blocking wall 11c of the first adapter body 11 toward a side portion of the first combining base wall 11d of the first adapter body 11, each of the second connection units 25 is an elongated slide block, each of the second connection units 25 extends from a side portion of the second blocking wall 21c of the second adapter body 21 toward a side portion of the second combining base wall 21d of the second adapter body 21. In some embodiments, the first connection unit 15 may be a slide block, and the second connection unit 25 may be a slide groove. In some embodiments, the widths at any portion inside the elongated slide groove are identical, and the widths at any portion of the elongated slide block are identical. In some embodiments, an end portion of the opening of the elongated slide groove has an increased width and is provided with a chamfer structure, and an end portion of the elongated slide block has a reduced width and is provided with a chamfer structure, so that the elongated slide groove can be docked with the elongated slide block properly.

Please refer to Fig. 3 and Fig. 6A. In some embodiments, the first connection units 15 are on two side portions of the first side wall 1 1a of the first adapter body 11, and the first engaging portion 16 is between the first connection units 15, but the instant disclosure is not limited thereto. In some embodiments, the first engaging portion 16 may be at a portion of the first side wall 11a of the first adapter body 11 and not between the first connection units 15. The second connection units 25 are on two side portions of the first side wall 21a of the second adapter body 21, and the second engaging portion 26 is between the second connection units 25, but the instant disclosure is not limited thereto. In some embodiments, the second engaging portion 26 may be at a portion of the first side wall 21a of the second adapter body 21 and not between the second connection units 25.

When the optical-fiber adapters are respectively inserted by optical-fiber connectors and optical-fiber cables, the gravity of the optical-fiber cables pull the optical-fiber adapters downward, and thus the downward pulling force is applied to the optical-fiber adapters. Therefore, according to some embodiments, through the fixation between the first connection units 15 and the second connection units 25 and the fixation between the first engaging portion 16 and the second engaging portion 26, the connecting side walls of the optical-fiber adapters do not detach from each other by the downward pulling force of the optical-fiber cables.

In some embodiments, after the first engaging portion 16 is assembled with the second engaging portion 26, a panel member is covered above the optical-fiber adapter for fixation, so that the first engaging portion 16 and the second engaging portion 26 can be prevented from being detached from each other.

Please refer to Fig. 3 and Fig. 6A. In some embodiments, the first engaging portion 16 is between the first connection units 15 and is adjacent to one of the first connection units 15, and the second engaging portion 26 is between the second connection units 25 and is adjacent to one of the second connection units 25. When the first optical-fiber adapter 1 is assembled with the second optical-fiber adapter 2, the first connection units 15 of the first adapter body 11 are respectively assembled with the second connection units 25 of the second adapter body 21 in a direction from bottom to top. Therefore, the first engaging portion 16 is assembled and positioned with the second engaging portion 26 in the direction from bottom to top. The first engaging portion 16 and the second engaging portion 26 have foolproof functions, so that the first engaging portion 16 can be prevented from being assembled with the second engaging portion 26 in the wrong direction (the direction from top to bottom). Therefore, after the first engaging portion 16 and the second engaging portion 26 are assembled and positioned with each other, the first blocking wall 11c of the first adapter body 11 is flush with the second blocking wall 21c of the second adapter body 21, and the first combining base wall 11d of the first adapter body 11 is flush with the second combining base wall 21d of the second adapter body 21.

Please refer to Fig. 6A. In some embodiments, the first engaging portion 16 is between the first side wall 11a of the first adapter body 11 and the first blocking wall 11c of the first adapter body 11, and the second engaging portion 26 is between the first side wall 121a of the second adapter body 21 and the second blocking wall 21c of the second adapter body 21, but the instant disclosure is not limited thereto.

Please refer to Fig. 1, Fig. 3, and Fig. 9. In some embodiments, the second connection units 25 at the front portion and the rear portion of the first side wall 21a of the second adapter body 21 respectively correspond to the third connection units 27 at the front portion and the rear portion of the second side wall 21b of the second adapter body 21. The second connection unit 25 at the front portion of the first side wall 21a and the third connection unit 27 at the front portion of the second side wall 21b are arranged on the same first axial line A1, and the second connection unit 25 at the rear portion of the first side wall 21a and the third connection unit 27 at the rear portion of the second side wall 21b are arranged on the same second axial line A2. The first axial line A1 and the second axial line A2 are lines arranged along a same horizontal direction.

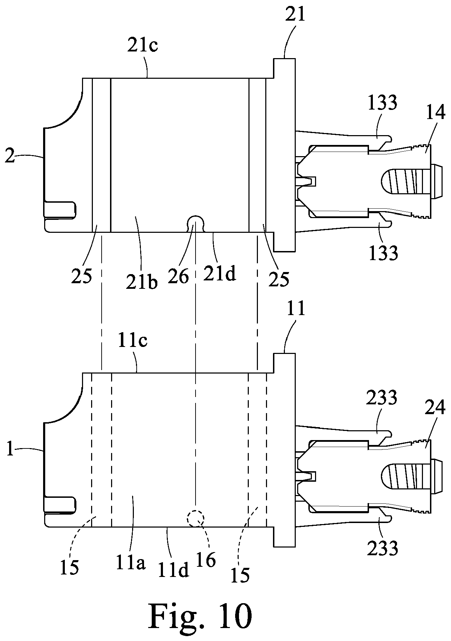

Please refer to Fig. 3 and Fig. 10. Fig. 10 illustrates an assembled side view of the optical-fiber adapter assembly, where the first engaging portion 16 is below the first side wall 11a of the first adapter body 11, and the second engaging portion 26 is below the first side wall 21a of the second adapter body 21. In some embodiments, the first engaging portion 16 is between the first side wall 11a of the first adapter body 11 and the first combining base wall 11d, and the second engaging portion 26 is between the first side wall 21a of the second adapter body 21 and the second combining base wall 21d of the second adapter body 21.

Please refer to Fig. 1nd Fig. 3. In some embodiments, for describing the structure by interconnecting several optical-fiber adapters, in the following descriptions, two optical-fiber adapters (the second optical-fiber adapter 2 and the third optical-fiber adapter 3) are provided as an illustrative example, but the instant disclosure is not limited thereto. In some embodiments, six, eight, twelve, etc. optical-fiber adapters may be provided and assembled with each other. In some embodiments, the second side wall 21b of the second adapter body 21 and the first side wall 21a of the second adapter body 21 of the second optical-fiber adapter 2 are symmetrically arranged at two sides of the second adapter body 21. The second side wall 21b of the second adapter body 21 has a plurality of third connection units 27 and a third engaging portion 28.

The combinable optical-fiber adapter assembly further comprises a third optical-fiber adapter 3, the third optical-fiber adapter 3 comprises a third adapter body 31, four side walls of the third adapter body 31 define a third receiving cavity 32, the third adapter body 31 has a third insertion opening 33 in communication with the third receiving cavity 32, and a first side wall 31a of the third adapter body 31 has a plurality of fourth connection units 37 and a fourth engaging portion 38. Each of the third connection units 27 is assembled with a corresponding one of the fourth connection units 37, and the third engaging portion 28 is assembled with the fourth engaging portion 38.

According to some embodiments of the instant disclosure, the first connection unit of the first adapter body is correspondingly docked with the second connection unit of the second adapter body, so that two adjacent optical-fiber adapters can be assembled with each other side-by-side. According to some embodiments, the optical-fiber cables are inserted into the optical-fiber adapter from one side of the optical-fiber adapter. As compared with the optical-fiber adapter known to the inventor, the entire length of the optical-fiber adapter is reduced, and thus the requirements for 5G optical-fiber modules can be satisfied. By arranging several optical-fiber adapters side by side and interconnecting the optical-fiber adapters with each other, the optical-fiber adapters allow the insertion of several optical-fiber connectors, so that the adapters can provide flexible layout configurations for the optical-fiber cables. According to some embodiments, through the fixation between the first connection units and the second connection units and the fixation between the first engaging portion and the second engaging portion, the connecting side walls of the optical-fiber adapters do not detach from each other by the downward pulling force of the optical-fiber cables.

## Claims

1. A combinable optical-fiber adapter assembly adapted to be installed on an adapter cassette (9) and connected to an optical-fiber cable (8) and a terminal device, wherein the combinable optical-fiber adapter assembly comprises:
a first optical-fiber adapter (1) comprising a first adapter body (11), wherein two ends of the first adapter body (11) have a first connecting end (132) and a first inserting end (131), the first connecting end (132) is inside the adapter cassette (9) and extends toward the terminal device, and the first inserting end (131) is outside the adapter cassette (9) and adapted to be inserted by the optical-fiber cable (8); four side walls of the first adapter body (11) define a first receiving cavity (12), and the first inserting end (131) of the first adapter body (11) has a first insertion opening (13) in communication with the first receiving cavity (12); the four side walls of the first adapter body (11) are a first side wall (11a), a second side wall (11b), a first blocking wall (11c), and a first combining base wall (11d), respectively; the first side wall (11a) and the second side wall (11b) of the first adapter body (11) respectively extend from two sides of the first combining base wall (11d) toward a same direction away from the first combining base wall (11d), the first blocking wall (11c) is connected to the first side wall (11a) and the second side wall (11b) of the first adapter body (11), the first blocking wall (11c) is spaced apart from the first combining base wall (11d), and the first side wall (11a) of the first adapter body (11) has a first connection unit (15); and
a second optical-fiber adapter (2) comprising a second adapter body (21), wherein two ends of the second adapter body (21) have a second connecting end (232) and a second inserting end (231), the second connecting end (232) is inside the adapter cassette (9) and extends toward the terminal device, and the second inserting end (231) is outside the adapter cassette (9) and adapted to be inserted by the optical-fiber cable (8); four side walls of the second adapter body (21) define a second receiving cavity (22), and the second inserting end (231) of the second adapter body (21) has a second insertion opening (23) in communication with the second receiving cavity (22); the four side walls of the second adapter body (21) are a first side wall (21a), a second side wall (21b), a second blocking wall (21c), and a second combining base wall (21d), respectively; the first side wall (21a) and the second side wall (21b) of the second adapter body (21) respectively extend from two sides of the second combining base wall (21d) toward a same direction away from the second combining base wall (21d), the second blocking wall (21c) is connected to the first side wall (21a) and the second side wall (21b) of the second adapter body (21), the second blocking wall (21c) is spaced apart from the second combining base wall (21d), and the first side wall (21a) of the second adapter body (21) has a second connection unit (25); the second connection unit (25) is docked with the first connection unit (15), so that the first adapter body (11) and the second adapter body (21) adjacent to the first adapter body (11) are assembled with each other side-by-side.

2. The combinable optical-fiber adapter assembly according to claim 1, wherein the first connection unit (15) has a first recess (151) and a first protrusion (152), the first recess (151) is at a front portion of the first side wall (11a) of the first adapter body (11), and the first protrusion (152) is at a rear portion of the first side wall (11a) of the first adapter body (11); or wherein the first connection unit (15) has a second protrusion (153) and a second recess (154), the second protrusion (153) is at the front portion of the first side wall (11a) of the first adapter body (11), and the second recess (154) is at the rear portion of the first side wall (11a) of the first adapter body (11).

3. The combinable optical-fiber adapter assembly according to claim 2, wherein the second connection unit (25) has a third protrusion (251) and a third recess (252), the third protrusion (251) is at a front portion of the first side wall (21a) of the second adapter body(21), and the third recess (252) is at a rear portion of the first side wall (21a) of the second adapter body (21); or wherein the second connection unit (25) has a fourth recess (253) and a fourth protrusion(254), the fourth recess (253) is at the front portion of the first side wall (21a) of the second adapter body (21), and the fourth protrusion (254) is at the rear portion of the first side wall (21a) of the second adapter body (21).

4. The combinable optical-fiber adapter assembly according to claim 3, wherein a width of the first recess (151) is greater than or equal to a width of the third protrusion (251), and a width of the first protrusion (152) is less than or equal to a width of the third recess (252).

5. The combinable optical-fiber adapter assembly according to claim 3, wherein a width of the second protrusion (153) is less than or equal to a width of the fourth recess (253), and a width of the second recess (154) is greater than or equal to a width of the fourth protrusion (254).

6. The combinable optical-fiber adapter assembly according to claim 1, wherein the first adapter body (11) has a plurality of first elastic arms (133) at the first connecting end (132), and a first connector (14) is adapted to be engaged between each two adjacent first elastic arms (133) among the first elastic arms (133); the second adapter body (21) has a plurality of second elastic arms (233) at the second connecting end (232), and a second connector (24) is adapted to be engaged between each two adjacent second elastic arms (233) among the second elastic arms (233); the first connector (14) and the second connector (24) are respectively connected to a transmission cable (6) inside the adapter cassette (9).

7. The combinable optical-fiber according to claim 6, wherein the first connector (14) comprises a housing (141), an insertion pin (142), and a spring (143), the housing (141) is fitted over the insertion pin (142) and the spring (143), and two ends of the spring (143) abut against an inner side of the housing (141) and the insertion pin (142), respectively.

8. The combinable optical-fiber adapter assembly according to claim 1, wherein the first connection unit (15) is on the first side wall (11a) of the first adapter body (11) along an axial direction (A1), the axial direction (A1) is perpendicular to an insertion direction (I) of the first receiving cavity (12), the second connection unit (25) is on the first side wall (21a) of the second adapter body (21) along the axial direction (A2), and the axial direction (A2) is perpendicular to an insertion direction (I) of the second receiving cavity (22).

9. The combinable optical-fiber adapter assembly according to claim 1, wherein the first connection unit (15) extends from a side portion of the first blocking wall (11c) of the first adapter body (11) to a side portion of the first combining base wall (11d) of the first adapter body (11), and the second connection unit (25) extends from a side portion of the second blocking wall (21c) of the second adapter body (21) to a side portion of the second combining base wall (21d) of the second adapter body (21).

10. The combinable optical-fiber adapter assembly according to claim 1, wherein the first side wall (11a) of the first adapter body (11) has a first engaging portion (16), the first side wall (21a) of the second adapter body (21) has a second engaging portion (26), and the first engaging portion (16) is assembled with the second engaging portion (26).

11. The combinable optical-fiber adapter assembly according to claim 10, wherein the first side wall (11a) of the first adapter body (11) has a plurality of the first connection units (15), the first connection units (15) are on two side portions of the first side wall (1 1a) of the first adapter body (11), and the first engaging portion (16) is between the first connection units (15); the first side wall (21a) of the second adapter body (21) has a plurality of the second connection units (25), the second connection units (25) are on two side portions of the first side wall (21a) of the second adapter body (21), and the second engaging portion (26) is between the second connection units (25).

12. The combinable optical-fiber adapter assembly according to claim 11, wherein the first engaging portion (16) is adjacent to one of the first connection units (15), and the second engaging portion (26) is adjacent to one of the second connection units (25).

13. The combinable optical-fiber adapter assembly according to claim 10, wherein the second engaging portion (26) has a groove (261) and an insertion hole (262), each of two sides of the insertion hole (262) has a buckling portion (263), the first engaging portion (16) has a protruding block (161), the protruding block (161) is engaged with the groove (261) through the insertion hole (262), and each of the buckling portions (263) contacts the protruding block (161) and is limited by the protruding block (161).

14. The combinable optical-fiber adapter assembly according to claim 10, wherein the first engaging portion (16) is between the first side wall (11a) of the first adapter body (11) and the first blocking wall (11c) of the first adapter body (11), and the second engaging portion (26) is between the first side wall (21a) of the second adapter body (21) and the second blocking wall (21c) of the second adapter body (21).

15. The combinable optical-fiber adapter assembly according to claim 10, wherein the first engaging portion (16) is between the first side wall (11a) of the first adapter body (11) and the first combining base wall (11d) of the first adapter body (11), and the second engaging portion (26) is between the first side wall (21a) of the second adapter body (21) and the second combining base wall (21d) of the second adapter body (21).

16. The combinable optical-fiber adapter assembly according to claim 1, wherein the first blocking wall (11c) of the first adapter body (11) is flush with the second blocking wall (21c) of the second adapter body (21), and the first combining base wall (11d) of the first adapter body (11) is flush with the second combining base wall (21d) of the second adapter body (21).

17. The combinable optical-fiber adapter assembly according to claim 1, wherein the second side wall (21b) of the second adapter body (21) and the first side wall (21a) of the second adapter body (21) are symmetrically arranged at two sides of the second adapter body (21), the second side wall (21b) of the second adapter body (21) has a plurality of third connection units (27) and a third engaging portion (28); the combinable optical-fiber adapter assembly further comprises a third optical-fiber adapter (3), the third optical-fiber adapter (3) comprises a third adapter body (31), four side walls of the third adapter body (31) define a third receiving cavity (32), two ends of the third adapter body (31) have third insertion openings (33) in communication with the third receiving cavity (32), and a first side wall (31a) of the third adapter body (31) has a plurality of fourth connection units (37) and a fourth engaging portion (38); each of the third connection units (27) is assembled with a corresponding one of the fourth connection units (37), and the third engaging portion (28) is assembled with the fourth engaging portion (38).

18. The combinable optical-fiber adapter assembly according to claim 17, wherein the first side wall (21a) of the second adapter body (21) has a plurality of the second connection units (25), the second connection units (25) at a front portion and a rear portion of the first side wall (21a) of the second adapter body (21) respectively correspond to the third connection units (27) at a front portion and a rear portion of the second side wall (21b) of the second adapter body (21).

19. The combinable optical-fiber adapter assembly according to claim 1, wherein a first length (D1) of the first blocking wall (11c) is less than a first length (D2) of the first combining base wall (11d), and a second length (D3) of the second blocking wall (21c) is less than a second length (D4) of the second combining base wall (21d).

20. The combinable optical-fiber adapter assembly according to claim 1, wherein the first adapter body (11) has a stopping portion (134) adjacent to the first connecting end (132), the second side wall (11b) of the first adapter body (11) has an engaging structure (11b1), the engaging structure (11b1) is engaged with one of two surfaces of the adapter cassette (9), and the stopping portion (134) is engaged with the other surface of the adapter cassette (9).
